(19) Europäisches Patentamt / European Patent Office / Office européen des brevets

(11) **EP 4 077 087 B1**

(12) **FASCICULE DE BREVET EUROPEEN**

(45) Date de publication et mention de la délivrance du brevet:
**31.01.2024   Bulletin 2024/05**

(21) Numéro de dépôt: **20812064.2**

(22) Date de dépôt: **30.11.2020**

(51) Classification Internationale des Brevets (IPC):
**B60W 30/16** *(2020.01)*   **B60K 31/00** *(2006.01)*
**B60W 50/06** *(2006.01)*   **B60W 50/00** *(2006.01)*
**B60W 50/02** *(2012.01)*

(52) Classification Coopérative des Brevets (CPC):
**B60W 30/16; B60K 31/0008; B60W 50/06;**
B60W 2050/0008; B60W 2050/0024;
B60W 2050/0215; B60W 2420/52; B60W 2520/10;
B60W 2554/802; B60W 2554/804; B60W 2556/50;
B60W 2720/10; B60W 2754/30; B60W 2754/50

(86) Numéro de dépôt international:
**PCT/EP2020/083948**

(87) Numéro de publication internationale:
**WO 2021/121934 (24.06.2021 Gazette 2021/25)**

(54) **SYSTÈME ET PROCÉDÉ DE CONTRÔLE DE VÉHICULE AVEC COMPENSATION DE RETARD TEMPOREL DE CAPTEURS**

FAHRZEUGSTEUERUNGSSYSTEM UND VERFAHREN MIT ZEITVERZÖGERUNGSKOMPENSATION DES SENSORS

VEHICLE CONTROL SYSTEM AND METHOD WITH SENSOR TIME DELAY COMPENSATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **16.12.2019   FR 1914481**

(43) Date de publication de la demande:
**26.10.2022   Bulletin 2022/43**

(73) Titulaire: **Renault s.a.s**
**92100 Boulogne Billancourt (FR)**

(72) Inventeurs:
 • **GONZALEZ BAUTISTA, David**
 **78210 Saint Cyr l'école (FR)**
 • **MILANES, Vicente**
 **92100 Boulogne-Billancourt (FR)**
 • **NAVAS MATOS, Francisco Martin**
 **75013 PARIS (FR)**

(56) Documents cités:
**EP-A2- 1 225 079     WO-A1-2018/063429**
**US-A- 5 901 059     US-A1- 2013 144 502**
**US-B1- 6 256 573**

 • **CHIEN C C ET AL: "ENTRAINMENT AND VEHICLE FOLLOWING CONTROLLERS DESIGN FOR AUTONOMOUS INTELLIGENT VEHICLES", PROCEEDINGS OF THE AMERICAN CONTROL CONFERENCE. BALTIMORE, JUNE 29 - JULY 1, 1994; [PROCEEDINGS OF THE AMERICAN CONTROL CONFERENCE], NEW YORK, IEEE, US, vol. 1 OF 03, 29 juin 1994 (1994-06-29), pages 6-10, XP000515243, ISBN: 978-0-7803-1784-0**

**Description**

**Domaine technique**

L'invention concerne de manière générale les systèmes de détection et en particulier un dispositif et un procédé de contrôle de véhicule utilisant des capteurs.

L'automatisation des véhicules est un enjeu majeur pour la sécurité automobile et l'optimisation de la conduite. Les véhicules automatisés, comme par exemple les véhicules autonomes et connectés, utilisent un système de perception comprenant un ensemble de capteurs pour détecter des informations environnementales permettant au véhicule d'optimiser sa conduite et d'assurer la sécurité des passagers.

Il est connu d'utiliser des dispositif de contrôles pour contrôler le fonctionnement du véhicule en fonction des informations retournées par le système de perception, comme par exemple les systèmes radar de régulation à distance ACC (acronyme pour l'expression anglo-saxonne correspondante «Adaptive Cruise Control ») utilisés pour réguler la distance entre les véhicules. US 6 256 573 81 divulgue un procédé de contrôle de la distance inter-véhicule comprenant la modification d'un gain de contrôle pour obtenir une réponse ayant une sensitivité adaptée au mouvement d'un véhicule précédent.

Quels que soient les types de capteurs utilisés par le véhicule, de tels capteurs peuvent introduire un retard temporel. Cependant, un tel retard peut avoir un impact majeur sur les performances du véhicule.

En particulier, la réponse des véhicules et le confort à bord des véhicules automatisés sont fortement dépendants de la réception des informations des capteurs au bon moment et au bon débit.

Les dispositifs de contrôle équipant les véhicules, tels que le système ACC, peuvent exploiter la différence de distance et de vitesse entre les véhicules qui se suivent sur une voie, les informations de distance et de vitesse étant déterminées par le système de perception. Par exemple, en considérant un véhicule donné (dit « véhicule ego ») dans lequel est implémenté un dispositif de contrôle pour réguler la vitesse du véhicule, le dispositif de contrôle peut exploiter les informations de distance et de vitesse relatives à un véhicule qui précède le véhicule ego sur la voie (appelé véhicule « précédent »). Lorsque la différence de vitesse est reçue par le contrôleur du véhicule ego avec un retard par rapport aux mesures réelles effectuées, un tel retard peut provoquer des réponses inappropriées de la part du véhicule. Le signal mesuré peut alors indiquer que le véhicule précédent est en train d'accélérer alors qu'en réalité il est en train de freiner. Le véhicule ego peut par la suite être amené à accélérer pour compenser l'information d'accélération reçue, amenant ainsi la distance inter-véhicule à des valeurs inappropriées et forçant le véhicule à effectuer une manoeuvre de freinage fort.

En considérant par exemple un retard d'une seconde dans l'information venant du capteur mesurant la distance entre véhicule (la distance réelle entre véhicules est envoyée au dispositif de contrôle avec un retard d'une seconde), le véhicule précédent sur la voie ne peut plus stabiliser les changements de vitesse dans le véhicule de tête (seul véhicule « précédent »). La distance inter véhicule n'est alors plus stable et la vitesse du véhicule oscille en permanence, amplifiant la vitesse du véhicule de tête. Les oscillations peuvent alors se propager aux véhicules suivants dans la voie et en cas de changements de vitesse importants du véhicule de tête, une collision peut se produire.

Des solutions ont été proposées pour des systèmes de contrôle de type CACC. De telles solutions proposent de traiter le problème des retards de perception en implémentant des communications particulières. Par exemple, dans US8352112 B2 et US2010/0256852, il est proposé d'utiliser des communications V2V (véhicule à véhicule) pour partager des informations sur les usagers routiers entre véhicules, de telles informations étant utilisées par les véhicules pour anticiper les actions d'accélérations ou de freinage. Cependant, de telles solutions ne permettent pas de traiter le délai temporel généré dans les données de perception reçues du véhicule.

Dans DE102012214555A1, un système a été proposé pour compenser le décalage temporel des communications V2X entre véhicules et d'autres objets communiquant (qui peuvent être d'autres véhicules, des dispositifs piéton ou infrastructures routières par exemple). Dans cette approche, le retard est mesuré par rapport à une référence temporelle pour surmonter le décalage temporel qui peut exister dans la communication. Cependant, cette solution ne permet pas de compenser le décalage temporel généré dans les systèmes de contrôle de véhicules.

Les systèmes existants de perception sont basés essentiellement sur l'utilisation d'un radar unique pour des applications de gestion de conduite d'un véhicule à partir des données relatives aux véhicules suivant et/ou au véhicule précédent situés sur la même voie. Cependant, les nouveaux systèmes de contrôle sont basés sur une fusion multi-capteurs qui fournissent des informations de capteurs plus retardées encore. Ainsi, en fonction du système de perception, le retard des informations de post traitement changeront.

Il existe ainsi un besoin pour un système de contrôle capable de compenser le retard des informations de capteurs équipant un véhicule.

## Définition générale de l'invention

L'invention vient améliorer la situation en proposant un procédé de contrôle implémenté dans un véhicule pour contrôler la conduite du véhicule à partir de données de capteurs implémentés dans un système de perception embarqué dans le véhicule. Le système de perception comprend un ou plusieurs capteurs et fournissant au moins une grandeur déterminée à partir des données mesurées par certains au moins des capteurs. Le procédé comprend une étape de contrôle implémentant une boucle de contrôle pour générer au moins un signal de commande à un ou plusieurs actionneurs de véhicule en fonction de l'erreur déterminée entre :

- une distance inter-véhicule ($d_i$) et une valeur cible (dn) de la distance inter-véhicule, et/ou

- une vitesse ($v_i$) du véhicule et une valeur cible de la vitesse du véhicule ($vc_i$).

La distance inter-véhicule représente la distance entre le véhicule et un véhicule précédent, le signal de commande dépendant d'au moins une paire de paramètres de contrôle (Kpi, Kvi).
Le procédé comprend une étape de calcul du retard entre l'instant où une grandeur est délivrée par le système de perception et l'instant de réception de la grandeur à l'étape de contrôle. Le procédé comprend en outre une étape de compensation de retard comprenant la détermination d'au moins une paire de paramètres de contrôle ayant une valeur optimale à partir d'un ensemble de valeurs de départ pour la paire de paramètres de contrôle, la paire de paramètres de contrôle ayant une valeur optimale étant sélectionnée parmi les valeurs de départ de la paire de paramètres de contrôle satisfaisant un ensemble de conditions de sélection comprenant au moins une condition relative à une valeur maximale de sensibilité, la valeur maximale de sensibilité étant définie en fonction des paramètres de contrôle et d'un temps d'espacement inter-véhicule de référence.
La condition relative à une valeur maximale de sensibilité peut être satisfaite pour une valeur de la paire de paramètres de contrôle si la valeur maximale de sensibilité pour la valeur de la paire est inférieure à un seuil de sensibilité prédéfini.
La paire de paramètres de contrôle ayant une valeur optimale peut être en outre sélectionnée parmi les valeurs de départ de la paire de paramètres de contrôle satisfaisant une condition relative à une fonction de stabilité de chaîne, la fonction de stabilité de chaîne étant définie comme la norme infinie de la fonction de transfert liée à position absolue du véhicule précédent et à la position absolue dudit véhicule, la fonction de stabilité de chaîne étant définie en fonction des paramètres de contrôle et d'un temps d'espacement inter-véhicule prédéfini.
Dans un mode de réalisation, la condition relative à la fonction de stabilité de chaîne peut être satisfaite pour une valeur de la paire de paramètres de contrôle si la valeur de la fonction de stabilité de chaîne pour la valeur de la paire est inférieure à un seuil de sensibilité prédéfini.
La paire de paramètres de contrôle ayant une valeur optimale peut être en outre sélectionnée parmi les valeurs de départ de la paire de paramètres de contrôle satisfaisant une condition relative aux capacités maximales des actionneurs.
Selon un aspect particulier de l'invention, la paire de paramètres de contrôle ayant une valeur optimale peut être la paire qui minimise l'erreur absolue intégrale de l'erreur de distance accumulée pendant une période de temps.
La période de temps peut être variable.
Dans un mode de réalisation, le temps d'espacement inter-véhicule de référence peut être augmenté si aucune valeur de départ de la paire de paramètres de contrôle ne satisfait les conditions de sélection, le procédé de contrôle comprenant une étape consistant à déterminer une valeur optimale de la paire de paramètres de contrôle à partir du temps d'espacement inter-véhicule de référence augmenté d'un incrément prédéterminé et de nouvelles valeurs de départ de la paire de paramètres de contrôle.
Il est en outre proposé un produit programme d'ordinateur, le programme d'ordinateur comprenant des instructions de code permettant d'effectuer les étapes du procédé selon l'une quelconque des caractéristiques précédentes, lorsque le programme est exécuté sur un ordinateur.
Il est par ailleurs proposé un système de contrôle implémenté dans un véhicule pour contrôler la conduite du véhicule à partir de données de capteurs implémentés dans un système de perception embarqué dans le véhicule, le système de perception comprenant un ou plusieurs capteurs et fournissant au moins une grandeur déterminée à partir des données mesurées par certains au moins desdits capteurs. Le système de contrôle comprend un calculateur de retard apte à calculer le retard entre une grandeur délivrée par le système de perception et la réception de la grandeur par le système de contrôle, le système de contrôle comprenant au moins un dispositif de contrôle implémentant une boucle de contrôle pour générer au moins un signal de commande à un ou plusieurs actionneurs de véhicule en fonction d'une erreur déterminée entre :

- une distance inter-véhicule et une valeur cible de la distance inter-véhicule, et/ou

- une vitesse du véhicule et une valeur cible de la vitesse du véhicule.

La distance inter-véhicule représentant la distance entre le véhicule et un véhicule précédent, le signal de commande dépendant d'au moins une paire de paramètres de contrôle (Kpi, Kvi).

Le système de contrôle comprend en outre un dispositif de compensation de retard configuré pour déterminer au moins une paire de paramètres de contrôle ayant une valeur optimale à partir d'un ensemble de valeurs de départ pour la paire de paramètres de contrôle, la paire de paramètres de contrôle ayant une valeur optimale étant sélectionnée parmi les valeurs de départ de la paire de paramètres de contrôle satisfaisant un ensemble de conditions de sélection comprenant au moins une condition relative à une valeur maximale de sensibilité, la valeur maximale de sensibilité étant définie en fonction desdits paramètres de contrôle et d'un temps d'espacement inter-véhicule de référence.

Le dispositif de contrôle peut être un dispositif de régulation de vitesse.

Les modes de réalisation de l'invention améliorent ainsi les performances du véhicule en détectant les retards des capteurs de perception embarqués sur le véhicule et en adaptant ensuite le système de contrôle

## Brève Description des Figures

D'autres caractéristiques, détails et avantages de l'invention ressortiront à la lecture de la description faite en référence aux dessins annexés donnés à titre d'exemple et qui représentent, respectivement :

La figure 1 représente un exemple d'environnement d'un véhicule ego dans un convoi de trois véhicules sur une voie routière ;

La figure 2 illustre un système de contrôle de véhicule comprenant un dispositif de compensation de retard selon certains modes de réalisation;

La figure 3 est un diagramme représentant le système de compensation de retard, selon certains modes de réalisation ;

La figure 4 est un circuit logique représentant la boucle de contrôle mise en oeuvre pour contrôler la conduite du véhicule en fonction des paramètres de contrôle selon certains modes de réalisation ;

La figure 5 est un organigramme représentant le procédé de contrôle selon certains modes de réalisation de l'invention ; et

La figure 6 illustre les performances du système de compensation de retard selon des modes de réalisation de l'invention.

## Description détaillée

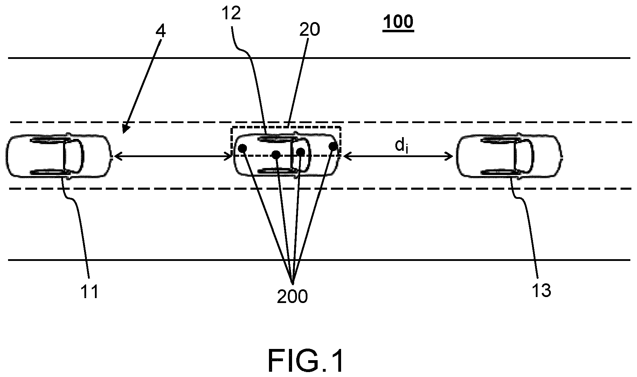

La Figure 1 représente un exemple d'environnement opérationnel 100 d'un véhicule 12 (dit « véhicule ego ») implémentant un système de compensation de retard de capteur, selon les modes de réalisation de l'invention.

Le véhicule ego 12 circule sur une voie routière 4. Il est équipé d'un système de contrôle utilisant les informations capturées par un ou plusieurs capteurs embarqués 200 embarqués sur le véhicule 12. Les capteurs 200 font partie d'un système de perception 20 représentés schématiquement sur la figure 1.

Le véhicule ego 12 est suivi par un véhicule 11 sur la voie 4 (véhicule 'suiveur'). Le véhicule ego 12 est précédé d'un autre véhicule 13 sur la voie 4 (dit « véhicule de tête » ou « véhicule précédent »).

Le véhicule ego 12, le véhicule suiveur 11 et/ou le véhicule de tête 13 peuvent être avantageusement des véhicules autonomes et connectés.

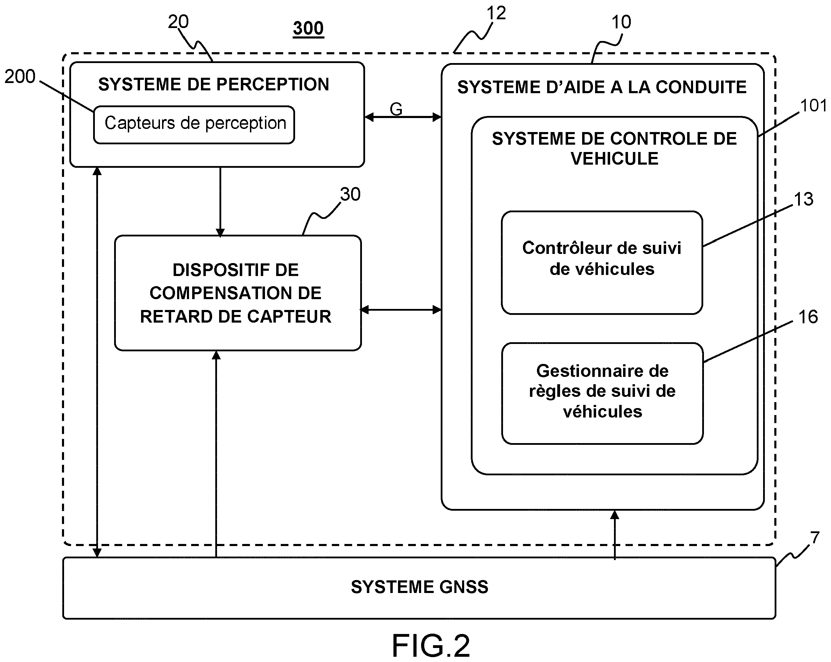

La figure 2 représente l'architecture d'un système de contrôle 300 implémentée dans un véhicule 12 pour contrôler la conduite d'un véhicule, selon certains modes de réalisation.

Le système de contrôle peut comprendre un système d'aide à la conduite 10 (tel qu'un système ADAS ou AD), et un système de perception 20 comprenant un ensemble de capteur de perception 200.

Les capteurs 200 peuvent inclure tout type de capteur tel que par exemple et sans limitation un lidar (Laser Détection And Ranging), un radar, une caméra (caméra fonctionnant dans le visible ou caméra fonctionnant dans l'infrarouge), un capteur à ultrasons, un capteur d'angle de volant, un capteur de vitesse de roue, un capteur de pression de freinage, un capteur de vitesse de lacet et d'accélération transversales, ou une combinaison de ces derniers.

Le système d'aide à la conduite 10 peut comprendre un ou plusieurs dispositifs de contrôle 101 tel qu'un régulateur de vitesse ACC. Un dispositif de contrôle 101 de type ACC peut par exemple utiliser un système radar (utilisant des capteurs radars 200) pour estimer la différence de vitesse entre deux véhicules qui se suivent (véhicules 12 et 13 par exemple en considérant le radar à l'avant du véhicule ego).

Le système de perception 20 peut être configuré pour détecter et /ou identifier, à partir des informations mesurées par les capteurs 200 :

- des objets de l'environnement du véhicule ego 12 pouvant inclure des objets fixes ou mobiles, des objets verticaux (par exemple, feux tricolores, panneaux de signalisation, etc.) et/ou des objets horizontaux (par exemple des lignes de marquage des routes, de lignes de marquage de signalisation telles que des stops ou des lignes de cédez-le-passage),
- des piétons,
- des véhicules, et/ou
- des infrastructures routières.

Le système de perception 20 peut en outre implémenter des algorithmes de fusion pour traiter les informations issues des différents capteurs 200 et effectuer une ou plusieurs opérations de perception, comme par exemple le suivi et la prédiction de l'évolution de l'environnement du véhicule ego 12 dans le temps, la génération d'une carte dans laquelle est positionnée le véhicule ego 12, la localisation du véhicule ego sur une carte, etc.

Les algorithmes de fusion multicapteur peuvent combiner des informations issues des différents capteurs 200 pour déterminer une grandeur utilisée par le système de perception 20 pour effectuer des opérations de perception telles que la détection et/ou le suivi d'obstacles, ou la détermination de la localisation globale du véhicule ego 11 qui utilise une fusion de données de système de positionnement 70.

Les données de positionnement peuvent être en outre fournies au système d'aide à la conduite 10.

Le système de positionnement peut être avantageusement un système de positionnement par Satellite GNSS (acronyme pour « Global Navigation Satellite System ») 70. Les données de positionnement fournies par un tel système GNSS 70 peuvent être utilisées le système d'aide à la conduite 10 pour synchroniser le temps du véhicule. Le système GNSS 70 peut être en outre configuré pour fournir des informations relatives à la position du véhicule précédent 13, au véhicule ego 12 (chaque véhicule est équipé de son GPS). Les données de position peuvent être fournies par le système GNSS 70 sous la forme de données GPS. Le système GNSS 70 peut fournir les informations de position des véhicules 11, 12 et/ou 13 selon une période donnée.

L'invention fournit un système de contrôle dans lequel le système de perception 20 fournit au moins une grandeur déterminée à partir des données mesurées par certains au moins des capteurs 200. Le système de contrôle comprend un calculateur de retard apte à calculer le retard entre une grandeur délivrée par le système de perception 20 et la réception de la grandeur par le système de contrôle.

Le système de contrôle comprend au moins un dispositif de contrôle implémentant une boucle de contrôle pour générer au moins un signal de commande à un ou plusieurs actionneurs de véhicule en fonction de l'erreur déterminée entre :

- une distance inter-véhicule (di) et la valeur cible (dri) de la distance inter-véhicule, et/ou
- l'erreur entre la vitesse (vi) du véhicule et la valeur cible de la vitesse du véhicule (vci).

Le signal de commande dépend d'au moins une paire de paramètres de contrôle (Kpi, Kvi).

Le système de contrôle comprend en outre un dispositif de compensation de retard 30 configuré pour déterminer au moins une paire de paramètres de contrôle ayant une valeur optimale à partir d'un ensemble de valeurs de départ pour la paire de paramètres de contrôle, la paire de paramètres de contrôle ayant une valeur optimale étant sélectionnée parmi les valeurs de départ de la paire de paramètres de contrôle satisfaisant un ensemble de conditions de sélection comprenant au moins une condition relative à une valeur maximale de sensibilité, la valeur maximale de sensibilité étant définie en fonction des paramètres de contrôle et d'un temps d'espacement inter-véhicule de référence.

Le dispositif de compensation de retard 30 peut ainsi compenser le retard des signaux des capteurs 200 reçus par le système d'aide la conduite 10.

Le dispositif de compensation de retard 30 peut être configuré pour déterminer le retard présent dans les signaux de certains au moins des capteurs et déterminer des paramètres de contrôle à partir du retard déterminé. Le dispositif de compensation de retard 30 peut alors transmettre les paramètres de contrôle déterminé au système de contrôle qui régule alors le fonctionnement du véhicule à partir des paramètres de contrôle déterminés. Dans des modes de réalisation, le système de contrôle 101 peut comprendre un contrôleur de suivi de véhicule 13 configuré pour ajuster le fonctionnement d'un ou plusieurs actionneurs de véhicule 12 (par exemple actionneurs de freinage ou d'accélération) en fonction des valeurs de paramètres de contrôle. Le système de contrôle 101 peut comprendre en outre un gestionnaire de règles de suivi de véhicule 16 définissant des conditions d'actionnement des actionneurs en fonction d'événements détectés.

En mode suivi de véhicule, la vitesse du véhicule et l'inter-distance entre le véhicule ego 12 et le véhicule précédent 13 sont contrôlés. En particulier, les grandeurs suivantes peuvent être contrôlées pour assurer le suivi de véhicule :

- L'inter-distance $d_i$ qui est comparée à la distance inter-véhicule minimale (inter-distance de sécurité) ; et/ou
- Le temps inter-véhiculaire, défini par le rapport entre l'inter-distance $d_i$ et la vitesse $v_i$, et qui est comparé à un temps inter-véhiculaire minimal h (encore appelé temps de référence) ; et/ou
- La vitesse relative entre le véhicule ego 12 et le véhicule précédent 13 qui doit être régulée à zéro.

Dans un mode de suivi de véhicule, une loi de contrôle est appliquée pour maintenir la distance inter-véhicule (ego-précédent) à la valeur cible. Les inter-distances peuvent suivre un modèle de référence défini par rapport à une zone de collision prédéfinie.

La distance inter-véhicule peut être mesurée par exemple par un capteur 200 de type télémètre laser (LIDAR), ou en utilisant deux caméras installées de part et d'autre du pare-brise du véhicule.

La vitesse du véhicule ego 12 peut être obtenue en utilisant un capteur de type odomètre.

Les accélérations longitudinale et latérale du véhicule 12 peuvent être déterminées en utilisant une unité de mesure inertielle.

Les vitesses de lacet, de roulis et de tangage du véhicule 12 peuvent être déterminées à l'aide de gyroscopes.

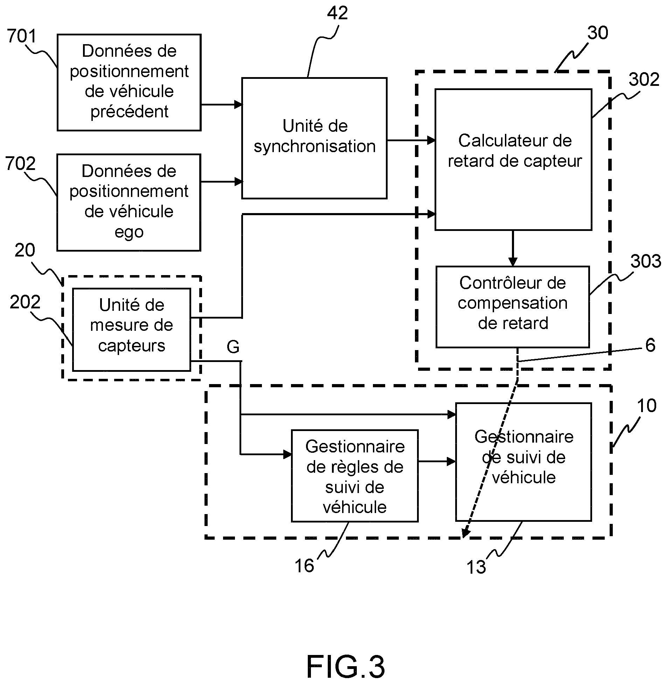

La figure 3 est un diagramme illustrant le fonctionnement du dispositif de compensation de retard 30 selon certains modes de réalisation.

Le dispositif de compensation de retard 30 peut recevoir des données de positionnement 701 du véhicule précédent 11 et des données de positionnement 702 du véhicule ego 12 fournies par le système de positionnement 70 (système GNSS par exemple). Le système GNSS peut fournir les données de positionnement sous la forme de données de réalité de terrain. Le système de positionnement 70 peut être un système GPS configuré pour effectuer des corrections différentielles. Le système de positionnement 70 peut comprendre ou interagir avec une Unité de Mesure Inertielle IMU (acronyme pour l'expression anglo-saxonne correspondante « Inertial Measurement Unit ») apte à fournir une résolution d'erreur de position (1 cm d'erreur par exemple). Le système de positionnement peut en outre fournir d'autres informations telles que la direction ou la vitesse du véhicule. Le véhicule ego 12 peut être équipé du même système de positionnement 70 que le véhicule précédent de manière à imiter les incohérences dans les données de positionnement 701 et 702.

Les données positionnement 701 et 702 peuvent être préalablement synchronisées par une unité de synchronisation 42. L'unité de synchronisation 42 est configurée pour extraire un ensemble d'informations de réalité de terrain à caractériser selon le système de perception 20 à partir des données de positionnement reçues 701 et 702 (données de réalité de terrain). Les informations extraites peuvent comprendre la distance, la vitesse, l'accélération, et/ou la vitesse angulaire des véhicules 11 et/ou 12, ou encore toute combinaison de ces grandeurs relatives aux performances du capteur.

Le dispositif de compensation de retard 30 comprend avantageusement un calculateur de retard 302 configuré pour déterminer, à partir des informations de réalité de terrain extraites par l'unité de synchronisation et de données de capteurs mesurées par le système de perception 20, au moins une référence de mesure temporelle en temps réel pour le système de perception 20. Les données de capteurs sont fournies par une unité de mesure de capteurs 202. Le calculateur de retard 302 est en outre configuré pour calculer le retard temporel relatif à au moins un capteur du système de perception 20 en comparant chaque référence de mesure temporelle en temps réel à la sortie correspondante du système de perception 20.

Tel qu'utilisé ici, le retard temporel désigne la différence temporelle entre la sortie synchronisée de l'unité de synchronisation et la sortie réelle de l'unité de mesure de capteurs 202.

Le dispositif de compensation de retard 30 comprend en outre un contrôleur de compensation de retard 303 configuré pour déterminer des valeurs de paramètres de contrôle optimisées, les paramètres de contrôle comprenant au moins deux paramètres Kpi et Kvi du contrôleur de suivi de véhicule 16 Le contrôleur de compensation de retard 303 est configuré pour fournir les valeurs optimisées des paramètres de contrôle au contrôleur de suivi de véhicule 16. Les valeurs des paramètres de contrôle Kpi et Kvi ainsi déterminées permettent de compenser le retard de capteur calculé par le calculateur de retard de capteur 302.

Comme illustré par la flèche en pointillés 6 qui part du contrôleur de compensation de retard 303, les paramètres de contrôle Kpi et Kvi peuvent changer en temps réel.

Les modes de réalisation permettent ainsi de compenser le retard temporel de perception et de capteur dans un dispositif de contrôle implémenté dans un véhicule, tel que par exemple un véhicule autonome. Un véhicule autonome peut être configuré pour exécuter un ensemble de fonctions autonomes telles le suivi de véhicule en maintenant une distance de sécurité.

L'unité de mesure de capteurs 202 est un sous-bloc du système de perception 20 qui délivre la sortie du système de perception 20 à partir des informations collectées par les capteurs 200. L'unité de mesure de capteurs 202 est configurée pour collecter les informations fournies par les capteurs 200 équipant le véhicule ego 12. L'unité de mesure de capteurs 202 peut en outre implémenter le ou les algorithmes de fusion mis en oeuvre par le système de perception 20, ainsi que les procédés de traitement de données et/ou de traitement computationnel exécutés pour déterminer la sortie du système de perception 20. La sortie du système de perception 20 peut inclure par exemple l' inter-distance entre les véhicules 12 et 13, la vitesse du véhicule 13 ou 12 ou tout autre variable relative aux données mesurée par les capteurs 200 utilisée par le système de contrôle 101.

Le calculateur de retard de capteur 302 synchronise la sortie de l'unité de synchronisation avec la sortie du système de perception 20 pour déterminer le retard de capteur. Le retard de capteur peut être fourni par le calculateur de retard 302 sous la forme d'une description mathématique du retard qui peut comprendre une constante ou une fonction. Le contrôleur de compensation de retard 303 peut utiliser une telle description mathématique du retard pour ajuster les performances du véhicule ego 12 afin de compenser le retard de capteur. Dans un exemple d'application de l'invention à un système de contrôle de type ACC (régulateur de vitesse), le contrôleur de compensation de retard 303 peut par exemple mettre à jour le contrôleur de suivi de véhicule 13 et/ou mettre à jour les règles de suivi de véhicule 16 pour obtenir les meilleures performances possibles.

L'unité de synchronisation 42 et le dispositif de compensation 30 peuvent opérer dans un mode hors-ligne dans lequel les données sont enregistrées au cours d'une ou plusieurs exécutions des composants 42 et 30. La sortie du dispositif de compensation de retard 30 peut alors être transmise au contrôleur de suivi de véhicule 16 pour ajuster le comportement du contrôleur de suivi de véhicule 16. Le retard peut être déterminé dans ce mode de réalisation à partir des données enregistrées, en exécutant le procédé mis en oeuvre dans le contrôleur de compensation de retard 303 pour obtenir les paramètres de contrôle optimaux Kpi et Kvi qui permettent de compenser le retard calculé. Si le retard a une valeur fixe, les paramètres de contrôle du contrôle de compensation de retard 33 peuvent être fixes. Sinon, si le retard détecté varie, les paramètres de contrôle du contrôleur de suivi de véhicule peuvent varier en fonction de la variation du retard.

En variante, le procédé mis en oeuvre dans le contrôleur de compensation de retard 303 peut être exécuté en temps réel, le véhicule précédent 11 communicant sa position à l'unité de synchronisation 202 du véhicule ego 12, obtenant le retard de capteur et modifiant les paramètres de contrôle du contrôleur de suivi de véhicule 34 dynamiquement.

Les blocs 13 et 16 correspondent à la boucle de contrôle du véhicule (par exemple mise e oeuvre par un système de contrôle ACC 101). La mesure d'au moins une grandeur G en sortie du système de perception 20 peut être transmise au gestionnaire de règles de suivi de véhicule 16 qui détermine l'erreur $e_i$ entre la grandeur mesurée G et la valeur cible $G_{cible}$ de cette grandeur (la grandeur peut être par exemple la distance) et fournit cette erreur $e_i$ au contrôleur de suivi de véhicule 13 pour qu'il corrige l'erreur déterminée à partir de paramètre de contrôle optimisés Kpi et Kvi. Le contrôleur de suivi de véhicule 13 peut notamment émettre des commandes à des actionneurs de véhicule adaptés (non représentés), en fonction de l'erreur déterminée.

Le dispositif de compensation de retard 30 détermine avantageusement des paramètres de contrôle qui peuvent être utilisés par le contrôleur de suivi de véhicule 34 pour éviter les effets négatifs du retard de capteur dans le système de contrôle 101 (par exemple système ACC). Les paramètres de contrôle déterminés peuvent ainsi compenser le retard temporel selon une ou plusieurs règles d'espacement inter-véhicule définies par le gestionnaire de règles de suivi de véhicule 16 et en tenant compte des dynamiques du véhicule 12.

Dans un mode de réalisation, les règles d'espacement inter-véhicule comprennent le temps inter-véhicule de référence h qui définit le temps minimum séparant le véhicule ego du véhicule qui le suit 11.

Le dispositif de compensation de retard peut reposer notamment sur une analyse de données de robustesse, de performance, et/ou de stabilité du véhicule ego. Il peut en complément reposer sur une analyse de la saturation des actionneurs du véhicule.

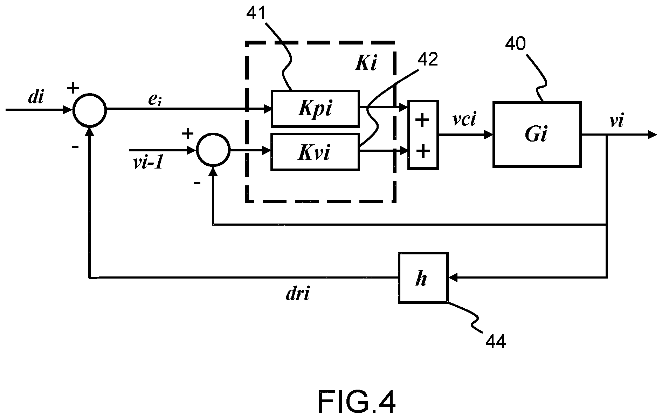

La figure 4 représente un exemple de boucle de contrôle mise en oeuvre par le système de contrôle 101 (et correspondant aux fonctions du gestionnaire de règles 16 et du contrôleur de suivi 13) pour contrôler le fonctionnement des actionneurs du véhicule.

La boucle de contrôle représente la loi de contrôle appliquée pour exploiter la liaison sans fil existant entre les véhicules qui se suivent et qui permet de transmettre l'état courant du véhicule précédent 13 au véhicule ego 12. La boucle de contrôle permet de préserver une distance désirée entre le véhicule 12 et le véhicule précédent 13, quel que soit le retard détecté dans les grandeurs de capteurs G déterminées par le système de perception. Dans l'exemple de la figure 4, les grandeurs délivrées par le système de perception 20 susceptible d'être reçues avec un retard incluent la distance inter-véhicule et la vitesse relative entre les véhicules.

Les entrées de la boucle de contrôle de la figure 4 sont définies par l'erreur $e_i$ entre une grandeur G représentée par la distance inter-véhicule $d_i$ et sa valeur cible $dr_i$ et la vitesse relative $(v_{i-1} - v_i)$

Dans ce mode de réalisation, la mesure de la distance $d_i$ et de la vitesse $v_i$ du véhicule ego 12 sont déterminées par le système de perception 20 et sont transmises au gestionnaire de règles de suivi de véhicule 16 qui détermine ainsi :

- l'erreur ei entre la distance mesurée $d_i$ et la valeur cible $dr_i$ ;
- l'erreur $(v_{i-1} - v_i)$ entre la vitesse $v_{i-1}$ du véhicule précédent 11 et la vitesse $v_i$ du véhicule ego 11.

Le contrôleur de suivi 13 peut corriger ces erreurs en appliquant le contrôleur Ki à deux gains Kpi et Kvi, ces gains correspondant aux valeurs des paramètres de contrôle optimisés déterminés par le dispositif de compensation de retard 30.

Les dynamiques longitudinales $G_i(s)$ d'un véhicule ego i ayant une vitesse commandée *vci* et une vitesse vi sont représentées par une fonction de transfert de deuxième ordre (1):

$$G_i(s) = \frac{G_{Gi}w_{ni}^2}{s^2 + 2\zeta_i w_{ni}s + w_{ni}^2} \qquad (1)$$

Dans l'équation (1):

- $w_{ni}$ représente la fréquence naturelle en rad/s (radians par seconde) ;

- $\zeta_i$ représente le facteur d'amortissement ;

- $G_{Gi}$ représente le gain du système ; et

- L'indice *i* désigne l'indice du véhicule ego 11 tandis que l'indice i-1 désigne l'indice du véhicule précédent 13.

Gi est un modèle qui représente la dynamique longitudinale de la voiture, nécessaire pour définir la loi de contrôle.

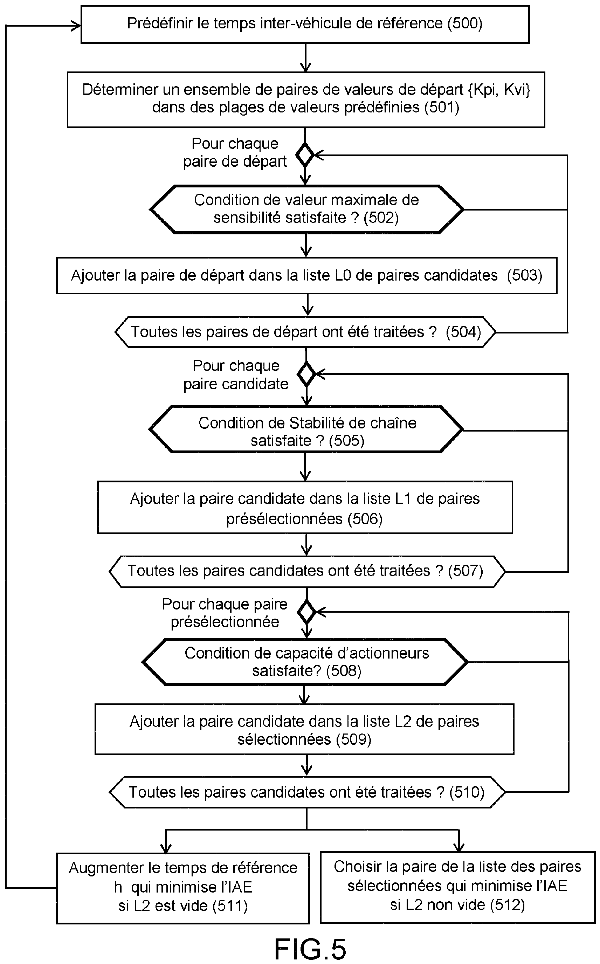

Sur la figure 4, le bloc $G_i$ 40 est connecté au système de contrôleur ACC (101) représenté par le bloc *Ki* 40 sur la figure 5. Le contrôleur Ki peut être implémenté en utilisant différentes techniques de contrôle.

Dans l'exemple de la figure 4 correspondant à un système de contrôle 101 de type ACC, le contrôleur Ki comprend un contrôleur à rétroaction à deux gains correspondants respectivement au premier indicateur Kpi représenté par le bloc 41 et au deuxième indicateur Kvi représenté par le bloc 42.

Le bloc Kpi 41 est configuré pour réguler l'erreur *ei* entre :

la distance relative *di* mesurée par le système de perception 20, et

une distance inter-véhicule de référence *dri* définie par une règle d'espacement inter-véhicule.

La distance $d_i$ correspond à la différence $X_{i-1} - X_i$ entre la position absolue du véhicule ego 13 $X_i$ et la position absolue du véhicule précédent 13 $X_{i-1}$.

Le bloc *Kvi* 42 est configuré pour réguler la différence de vitesse entre la vitesse du véhicule précédent 13 (encore appelé cible *i-1*) and la vitesse du véhicule ego 12 (véhicule *i*). La vitesse du véhicule précédent *i-1* (11) peut être reçue par le système de perception 20.

La distance inter-véhicule *Dri* peut être déterminée à partir d'une règle d'espacement inter-véhicule définie par le temps de référence *h* (headtime). Dans un mode de réalisation, la distance inter-véhicule de référence *Dri* peut être égale au produit de la vitesse $v_i$ du véhicule ego 12 par la constante de temps *h* :

$$Dri = h.vi \qquad (2)$$

L'erreur $e_i$ entre la distance relative $d_i$ mesurée par le système de perception 20 et la distance inter-véhicule de référence *Dri* peut être ainsi déterminée selon la relation (3) correspondant à une rétro-régulation $H_i= hs + 1$ (représentation de Xi + Vi * h dans le domaine de Laplace) connectée à la position absolue $X_i$ du véhicule ego 12, la distance $d_i$ and et la vitesse $v_{i-1}$ du véhicule précédent 13, $d_i$ et $v_{i-1}$ correspondant aux signaux susceptibles d'avoir un retard temporel :

$$e_i = d_i - d_{ri} = X_{i-1} - X_i - hv_i \qquad (3)$$

Par ailleurs, d'après le circuit logique de la figure 4 :

$$vc_i = e_i.kpi + (v_{i-1} - v_i).Kvi \qquad (4)$$

Avantageusement, le contrôleur de compensation de retard 303 repose sur la détermination de valeurs optimisées des gains Kpi et Kvi à partir de différentes conditions de fonctionnement du véhicule (telles que par exemple des capacités des actionneurs, des dynamiques du véhicule, et du retard de perception), et de la stabilité de chaîne SS (« string stability » en langue anglo-saxonne).

Une propriété de stabilité locale fait référence à la propriété de stabilité d'un seul véhicule, selon qu'une perturbation dans le profil de vitesse peut être atténuée ou non. La stabilité locale d'un véhicule est en général assurée par un système de contrôle de véhicule de type ACC.

La stabilité de chaîne SS implique une pluralité de véhicules. La propriété de stabilité de chaîne est définie comme l'atténuation des perturbations dans une chaîne de véhicules. Elle permet de limiter les accidents routiers et d'améliorer le flux de trafic dans une chaîne de véhicules.

Plus précisément, la stabilité de chaîne peut être définie comme l'atténuation d'une perturbation le long d'une chaîne de véhicules, ce qui est équivalent à la norme infinie (« infinity norm » en langue anglo-saxonne) de

$$\left\| X_i /_{X_{i-1}} \right\| \infty \leq 1$$

(maximum de la norme infinie du rapport entre la position absolue $X_i$ du véhicule ego 12 et de la position absolue $X_{i-1}$ du véhicule précédent 13 est inférieur à 1). Lorsque la propriété de stabilité de chaîne est vérifiée, une perturbation dans la position absolue $X_{i-1}$ du véhicule précédent 13 (véhicule cible i-1) ne sera pas amplifiée dans la position absolue $X_i$ de véhicule ego 12 (véhicule i).

Telle qu'utilisée ici, une Fonction de Transfert de Sensibilité fait référence à une propriété de robustesse du système de contrôle. La Fonction de Transfert de Sensibilité décrit la sortie du système de contrôle 101 en fonction de la perturbation d'entrée et modélise les dynamiques ou les perturbations du système de contrôle 10. La Fonction de Transfert de Sensibilité peut être minimisée lorsqu'elle est en dehors de la portée de la largeur de bande du véhicule, ce qui permet de filtrer les dynamiques et/ou le bruit haute fréquence non modélisés qui peuvent être présents dans le véhicule 12.

L'erreur de distance $ei$ est liée aux performances du système. Le contrôleur de compensation de retard 303 permet avantageusement de minimiser l'erreur de distance $ei$ pour satisfaire la distance inter-véhicule de référence dri définie par les règles d'espacement inter-véhicule.

Le contrôleur de compensation de retard 303 est en outre soumis à des contraintes liées aux limitations physiques des actionneurs.

Le contrôleur de compensation de retard 303 peut avantageusement résoudre un problème d'optimisation intégrant de telles contraintes pour minimiser l'erreur de distance ei à partir de la constante de temps de référence $h$ (headtime) définie dans les règles d'espacement inter-véhicule et du retard de perception détecté dans la distance di et/ou dans la vitesse $v_{i-1}$ du véhicule précédent, tels que calculés par le calculateur de retard de capteur 32.

Dans un mode de réalisation, le contrôleur de compensation de retard 303 peut être configuré pour déterminer les paramètres $Kpi$ et $Kvi$ qui minimisent une fonction E en satisfaisant une condition de stabilité de chaîne SS, une condition relative aux capacités physiques maximales des actionneurs PL et une condition relative à une valeur de sensibilité maximale S.

La fonction E représente l'erreur absolue intégrale (IAE) de l'erreur de distance accumulée pendant une période de temps T égale au temps d'échantillonnage de l'algorithme de contrôle, par exemple 10 secondes. La fonction E correspond ainsi à E est l'intégral de l'erreur absolu $e_i$. La période de temps T peut être variable et peut couvrir les temps correspondant à des phases d'accélération et/ou de freinage avec une variation minimale de vitesse (par exemple de 5 kph). La période de temps maximale Tmax pour atteindre les changements de vitesse souhaités peut être également prédéfinie.

Le problème d'optimisation résolu défini par le contrôleur de compensation de retard 303 est avantageusement défini pour obtenir une excitation suffisante du système et simuler correctement une situation de suivi de véhicule. Les effets de retard temporels ne sont pas généralement pas visibles en l'absence de changement de vitesse.

La valeur de sensibilité maximale pour la largeur de bande considérée du véhicule est désignée par S. En l'absence de valeur qui garantisse une sensibilité donnée, la valeur de temps de référence h (« headtime ») pour le suivi de véhicule peut être augmentée pour trouver une solution optimale.

La valeur maximale de sensibilité S peut dépendre avantageusement des indicateurs de performance Kpi et Kvi, de la constante de temps de référence h, et de la fonction de transfert $G_i$ définissant les dynamiques longitudinales du véhicule ego i 12 ayant la vitesse vi.

Dans un mode de réalisation, la valeur maximale de sensibilité S peut être définie par la norme infinie ("infinity norm") de la Fonction de Transfert de Sensibilité pondérée par une fonction de poids *Ws*, selon l'équation (5) :

$$S = \left\|\frac{1/s}{1 + \dfrac{G_i k_{pi}(hs + 1)}{s} + G_i k_{vi}} Ws\right\| \qquad (5)$$

La norme infinie d'une fonction f() est définie par :

$$\|f\|_\infty = \|f\|_{\infty,G} = \max\{|f(x)| : x \in G\}$$

Dans l'équation (5), la Fonction de Transfert de Sensibilité est définie par :

$$\frac{1/s}{1 + \dfrac{G_i k_{pi}(hs + 1)}{s} + G_i k_{vi}} \qquad (6)$$

La fonction de poids Ws permet de choisir la gamme de fréquences dans laquelle la sensibilité doit être minimisée (filtre avec une largeur de bande de véhicule).

Lorsque des paires de paramètres de contrôle {*Kpi, Kvi*} qui minimisent la fonction E sont déterminées (paires candidates), il peut être ensuite vérifié si la condition de stabilité de chaîne SS est satisfaite pour certaines au moins des paires candidates. Les paires vérifiant la condition de stabilité SS sont alors sélectionnées. Sinon, si la condition de stabilité de chaîne SS n'est pas satisfaite pour aucune des paires candidates, la constante de temps de référence peut être augmentée et de nouvelles paires de valeurs {*Kpi, Kvi*} qui minimisent la fonction E peuvent être déterminées.

Dans une mode de réalisation, la condition de stabilité de chaîne est relative à une fonction de stabilité de chaîne SS qui peut être définie comme la norme infinie de la fonction de transfert liée aux distances absolues $X_i$ et $X_{i-1}$ du véhicule ego i et du véhicule précédent i-1 selon l'équation (7) :

$$SS = \left\|\frac{\dfrac{G_i k_{pi}}{s} + G_i k_{vi}}{1 + \dfrac{G_i k_{pi}(hs + 1)}{s} + G_i k_{vi}}\right\| \qquad (7)$$

La condition de stabilité de chaîne relative à une fonction de stabilité de chaîne SS est satisfaite si la norme infinie de SS est inférieure ou égale à un seuil de stabilité de chaîne Tss qui peut-être avantageusement égal à 1 (norme infinie de SS est inférieure ou égale à 1).

Si la condition de stabilité de chaîne est satisfaite pour les paires de paramètres {Kpi, Kvi} candidates sélectionnées, une condition additionnelle relatives aux limitations physiques des actionneurs PL peut être vérifiée pour ces paires candidates sélectionnées en considérant les capacités maximales des actionneurs activables par le système de contrôle 101.

L'application de la contrainte PL permet de transférer les résultats de l'optimisation du véhicule ego réel 12 en considérant des retards mécaniques réels sur les actionneurs. Dans un mode de réalisation, il peut être considéré qu'une solution candidate sélectionnée {Kpi, Kvi} satisfait la contrainte PL lorsque la solution reste dans la gamme de valeurs définies pour les capacités maximales des actionneurs (par exemple un couple de machine électrique maximal de 165 Nm et un coupe de freinage maximale de 1860 Nm).

Les paires candidate sélectionnée satisfaisant la condition PL sont alors retournées pour la mise en oeuvre de la boucle de contrôle par le gestionnaire de règles 16 et/ou le contrôleur de suivi de véhicule 16.

Dans de tels modes de réalisation, il est ainsi possible d'assurer que seules les solutions {Kpi, Kvi} qui assurent une stabilité de chaîne sans saturation des actionneurs peut être retournée comme paramètres de contrôle.

Dans les cas où le retard temporel existant ne peut être compensé en faisant variant les indicateurs *kpi* and *kvi,* le contrôleur de compensateur de retard 303 peut modifier les règles de suivi de véhicule gérées par le gestionnaire 16, par exemple en augmentant le temps de référence h pour compenser l'effet du retard. Dans les cas où aucune solution {*kpi, kvi*} n'est trouvée, le temps d'avance h peut être augmenté et le contrôleur de compensateur de retard 303 peut ensuite réitérer le procédé de détermination des paramètres de contrôle {*kpi, kvi*} avec la nouvelle valeur de la constante de temps de référence h, en résolvant le problème d'optimisation. Par exemple, le temps de référence h peut être augmenté par incrément de 0,01 seconde jusqu'à ce qu'une solution {*kpi, kvi*} soit trouvée.

L'invention fournit en outre un procédé de contrôle implémenté dans un véhicule 12 pour contrôler la conduite du véhicule à partir de données de capteurs implémentés dans le système de perception embarqué dans le véhicule. Le procédé comprend une étape de contrôle implémentant la boucle de contrôle pour générer au moins un signal de commande à un ou plusieurs actionneurs de véhicule en fonction de l'erreur déterminée entre :

- une distance inter-véhicule ($d_i$) et la valeur cible ($dr_i$) de la distance inter-véhicule, et/ou

- l'erreur entre la vitesse ($v_i$) du véhicule et la valeur cible de la vitesse du véhicule ($vc_i$).

La distance inter-véhicule représente la vitesse entre le véhicule et un véhicule précédent, le signal de commande dépendant d'au moins une paire de paramètres de contrôle (Kpi, Kvi).

Le procédé comprend une étape de calcul du retard entre l'instant où une grandeur est délivrée par le système de perception et l'instant de réception de la grandeur à l'étape de contrôle. Le procédé comprend en outre une étape de compensation de retard comprenant la détermination d'au moins une paire de paramètres de contrôle ayant une valeur optimale à partir d'un ensemble de valeurs de départ pour la paire de paramètres de contrôle, la paire de paramètres de contrôle ayant une valeur optimale étant sélectionnée parmi les valeurs de départ de la paire de paramètres de contrôle satisfaisant un ensemble de conditions de sélection comprenant au moins une condition relative à une valeur maximale de sensibilité, la valeur maximale de sensibilité étant définie en fonction des paramètres de contrôle et d'un temps d'espacement inter-véhicule de référence.

La figure 5 représente le procédé de contrôle selon un mode de réalisation.

A l'étape 500, le temps de référence h est fixé à une valeur initiale qui peut être une valeur minimale stable de temps de référence, sans considération de retard.

A l'étape 501, des valeurs de départ paramètres de contrôle *kpi* et *kvi* sont sélectionnées, chaque valeur de paramètre de contrôle étant déterminée entre une valeur de seuil minimale ($Kpi_{min}$ pour le paramètre Kpi et $Kvi_{min}$ pour le paramètre Kvi) et une valeur de seuil maximale ($Kpi_{max}$ pour le paramètre Kpi et $Kvi_{max}$ pour le paramètre Kvi). Par exemple des valeurs pour *Kpi* peuvent être choisies entre 0.1 et 2 par incrément de 0.01 seconde comme solutions candidates pour l'indicateur Kpi et des valeurs pour *kvi* peuvent être choisie entre 0 et 4 par incrément de 0.01 seconde comme solutions de départ pour l'indicateur Kpi. L'ensemble des paires de départ {Kpi, Kvi} prédéterminées est noté L0.

A l'étape 502, pour chaque paire de départ {Kpi, Kvi}, la condition relative à la valeur de sensibilité maximale S, définie selon l'équation (7), est testée. En particulier, à l'étape 502, seules les paires candidates {Kpi, Kvi} pour lesquelles la valeur de sensibilité maximale S est en dessous d'un seuil de bande passante prédéfini sont sélectionnées (le seuil peut être par exemple de 0db pour des fréquences supérieures à la bande passante du système). La condition S est testée pour chaque paire de départ de la liste L0 jusqu'à ce que toutes les paires aient été traitées (bloc 504). Les paires candidates satisfaisant la condition de valeur maximale de sensibilité sont ajoutées dans une liste L1 de paires candidates (503).

A l'étape 505, la condition de stabilité de chaîne (« string stability ») est testée pour les paires {Kpi, Kvi} candidates retenues à l'étape 503 (liste L1). En particulier, il peut être déterminée à l'étape 505 si la contrainte de stabilité de chaîne SS, définie par l'équation (8) a une valeur inférieure à un seuil prédéfini dans la bande passante du système (par exemple le seuil peut être égal à 0dB). L'étape 505 permet ainsi de filtrer les solutions candidates en ne conservant dans une liste L2 de paires présélectionnées (506) que les solutions candidates qui satisfont la contrainte de stabilité de chaîne. La condition SS est testée pour chaque paire candidate de la liste L1 jusqu'à ce que toutes les paires aient été traitées (bloc 507).

Telle qu'utilisée ici, La bande passante d'un système est l'intervalle de fréquences dans lequel l'affaiblissement du signal est inférieur à 3dB.

A l'étape 508, la condition de capacité des actionneurs est vérifiée pour le sous-ensemble de solutions {Kpi, Kvi} présélectionnées à l'étape 506. Cette étape permet de vérifier que les paramètres de contrôle ne dépassent pas les capacités d'accélération et de freinage des actionneurs activables par le système de contrôle (par exemple système ACC).

Si aucune paire ne satisfait les conditions des étapes 502, 505 et 508, à l'étape 511 le temps de référence initialement fixé à une valeur minimale peut être augmenté.

Sinon, si au moins une paire satisfait les conditions des étapes 502, 504 et 507 (liste de paires sélectionnées à l'étape 509 non vide), à l'étape 512, l'IAE (Erreur Absolue Intégrale (IAE) de l'erreur de distance absolu accumulée pendant une période de temps T) des paires qui satisfont de telles conditions est déterminé et la paire parmi les paires candidates restantes qui minimise l'IAE (Intégrale de la valeur absolue dans une période de temps prédéfini) est sélectionnée. Dans un mode de réalisation, le problème de minimisation de l'IAE peut être résolu hors ligne en pré-chargeant dans une table LTU (Look-Up Table) l'association entre des valeurs de paires {kpi, Kvi} et la valeur correspondante de l'IAE, pour différentes valeurs de dynamiques de véhicules, de capacités des actionneurs, de valeur de retard et de temps d'avance de référence.

Des modifications de capteurs ou de retard correspondant peuvent être également gérées dynamiquement (en ligne) par le système de compensation de délai 300 selon les modes de réalisation de l'invention.

Lorsque le retard est constant, des paramètres de contrôle Kpi et Kvi constants peuvent être choisis.

Avantageusement, le contrôleur de compensation de retard 303 est configuré pour maintenir le même temps de référence h lorsqu'il n'y a pas de retard détecté. Le temps de référence h n'est augmenté que si aucune solution stable {Kpi, Kvi} n'est trouvée pour le temps de référence h courant, dans les cas où un retard temporel est détecté dans les informations de capteur. Selon des modes de réalisation, l'augmentation du temps de référence est effectuée pour rester dans la plage de détection du système de perception 20 qui a un horizon électronique limité. En conséquence, le flux de trafic n'est pas impacté. En effet, une augmentation systématique du temps de référence pour chaque retard détecté, contrairement à l'approche selon les modes de réalisation de l'invention, aurait pour effet d'augmenter la distance inter-véhicule de référence entre le véhicule ego 12 et le véhicule précédent 11, ce qui aurait pour conséquence de diminuer le rendement du véhicule par voie et engendrerait des embouteillages plus importants et plus longs.

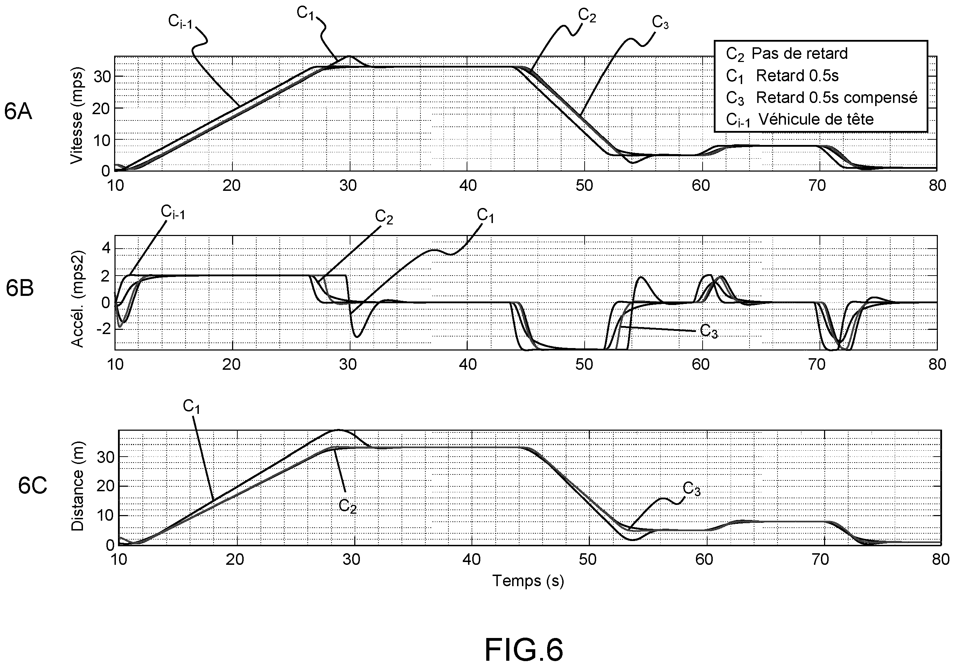

La figure 6 montre des diagrammes représentant les performances du système de compensation de retard 300, selon un exemple de réalisation utilisant un système de contrôle 101 de type ACC. La partie supérieure 6A de la figure 6 est un diagramme représentant la vitesse du véhicule. La partie centrale 6B de la figure 6 est un diagramme représentant l'accélération de la vitesse. La partie inférieure 6C de la figure 6 est un diagramme représentant la distance inter-véhicule *dri*.

La courbe correspondant au véhicule précédent i-1 est notée Ci-1. Les réponses de 3 contrôleurs différents à un même profil de vitesse du véhicule précédent ont été synchronisées pour les comparer.

Sur les diagrammes 6A, 6B et 6C:

- la courbe C1 correspond au véhicule ego i dans un cas sans retard ;

- la courbe C2 correspond au véhicule ego i dans un cas avec retard de 0,5 seconde non compensé ; et

- la courbe C3 correspond au véhicule ego i dans un cas avec un retard de 0,5 seconde compensé.

Dans l'exemple de la figure 6, les paramètres de contrôle Kpi and Kvi déterminés pour compensés le retard (cas correspondant à la courbe C3) sont des valeurs constantes, le retard ayant une valeur constante de 0,5 seconde.

La courbe C1 correspond à un ajustement classique du système de contrôle ACC en l'absence de retard. Un modèle de véhicule est utilisé pour la réponse longitudinale. La figure 6 montre que le véhicule ego i suit parfaitement le véhicule précédent i-1. La vitesse et l'accélération du véhicule ego 13 est sensiblement inférieure ou égale à celle du véhicule précédent 11, ce qui permet de bonnes performances du véhicule ego.

Les réponses C2 et C3 du contrôleur de compensation 33 correspondent à un retard de 0,5 seconde entre l'instant où un changement se produit et l'instant où le système de perception 20 détecte le changement en délivrant une sortie relative à ce changement (par exemple un retard de capteur incluant un temps de traitement).

La courbe C2 correspond à une solution classique de l'art antérieur sans compensation de retard. Le diagramme 6A montre que les oscillations de la vitesse du véhicule ego i sont amplifiées à chaque changement de vitesse du véhicule précédent i-1 pour le cas de la courbe C2. Les diagrammes 6B et 6C montrent que la vitesse inter-véhicule dri n'est plus respectée dans le cas sans compensation de retard illustré par la courbe C2, et que l'accélération du véhicule ego i amplifie significativement celle du véhicule précédent, en particulier autour de 30 secondes. Il est à noter en outre qu'un retard de 0,5 seconde ne provoque pas un retard de 0,5 seconde dans la réponse. Autour de 30 secondes, le retard entre la courbe Ci-1 et C2 (sans compensation de retard) est de plus d'une seconde avec une différence de seulement 500 ms de retard dans le système de perception 20.

La courbe C3 correspondant à la réponse obtenue avec le contrôleur de compensation de retard 33 selon les modes de réalisation de l'invention montre une bonne stabilité et augmente le temps de réponse du système de contrôle. Dans le diagramme d'accélération 6B, on peut voir qu'autour de 30 secondes, le retard est rattrapé. Le diagramme 6C montre que, dans le cas avec compensation de retard (C2) la même distance inter-véhicule dri que celle obtenue avec un cas sans retard (courbe C1) est garantie.

Dans des modes de réalisation, il est en outre possible de tenir compte des capacités maximales du système de perception 20 en prédéfinissant un retard maximum que le contrôleur de compensation 303 peut ajuster pour des performances données, et en configurant les capteurs à intégrer (nombre, type) dans le système de perception 20 pour une application donnée en fonction de ce retard maximum.

Les modes de réalisation de l'invention permettent ainsi de contrôler un système de perception 20 à capteurs multiples, et de rajuster dynamiquement le système de contrôle (ACC par exemple) pour compenser un retard détecté dans les informations retournées par le système de perception, quel que soit les types de capteurs utilisés par le système de perception. Ils permettent en outre de toujours fournir la meilleure réponse en tenant compte des capacités du système de contrôle et des actionneurs activables par le système de contrôle.

Bien que non limités à de telles applications, les modes de réalisation de l'invention ont un avantage particulier pour une mise en oeuvre dans des véhicules autonomes connectés par des réseaux de communication leur permettant l'échange de messages V2X et utilisant des systèmes de capteurs multi-fusion. Dans de telles applications, la synchronisation, le temps de traitement et la gestion du retard peut varier d'un système à l'autre. Les modes de réalisation permettent de compenser les valeurs de retard, rendant le système de contrôle indépendant de l'ensemble de capteurs et lui permettant d'ajuster dynamiquement le contrôle sur le véhicule.

L'homme du métier comprendra que le système ou des sous-système selon les modes de réalisation de l'invention peuvent être mis en oeuvre de diverses manières par matériel (« hardware »), logiciel, ou une combinaison de matériel et de logiciels, notamment sous la forme de code de programme pouvant être distribué sous la forme d'un produit de programme, sous diverses formes. En particulier, le code de programme peut être distribué à l'aide de supports lisibles par ordinateur, qui peuvent inclure des supports de stockage lisibles par ordinateur et des supports de communication. Les procédés décrits dans la présente description peuvent être notamment implémentés sous la forme d'instructions de programme d'ordinateur exécutables par un ou plusieurs processeurs dans un dispositif informatique d'ordinateur. Ces instructions de programme d'ordinateur peuvent également être stockées dans un support lisible par ordinateur.

Par ailleurs, l'invention n'est pas limitée aux modes de réalisation décrits ci-avant à titre d'exemple non limitatif. Elle englobe toutes les variantes de réalisation qui pourront être envisagées par l'homme du métier. En particulier, l'homme du métier comprendra que l'invention n'est pas limitée à des types de capteurs particuliers du système de perception 20, à un système de contrôle de véhicule spécifique, ni à un type de véhicule particulier (des exemples de véhicule incluent sans limitation des voitures, des camions, des bus, etc.).

## Revendications

1. Procédé de contrôle implémenté dans un véhicule (12) pour contrôler la conduite du véhicule (12) à partir de données de capteurs (200) implémentés dans un système de perception (20) embarqué dans le véhicule, le système de perception comprenant un ou plusieurs capteurs et fournissant au moins une grandeur déterminée à partir des données mesurées par certains au moins desdits capteurs, le procédé comprenant une étape de contrôle implémentant une boucle de contrôle pour générer au moins un signal de commande à un ou plusieurs actionneurs de véhicule en fonction d'une erreur déterminée entre :

   - une distance inter-véhicule ($d_i$) et une valeur cible (dn) de la distance inter-véhicule, et/ou
   - une vitesse ($v_i$) du véhicule et une valeur cible de la vitesse du véhicule ($vc_i$),

   la distance inter-véhicule représentant la distance entre ledit véhicule (12) et un véhicule précédent (13), le signal de commande dépendant d'au moins une paire de paramètres de contrôle (Kpi, Kvi), le procédé étant **caractérisé en ce qu'**il comprend une étape de calcul du retard entre l'instant où une grandeur est délivrée par le système de perception (20) et l'instant de réception de la grandeur à l'étape de contrôle, et **en ce qu'**il comprend en outre une étape de compensation de retard comprenant la détermination d'au moins une paire de paramètres de contrôle ayant une valeur optimale à partir d'un ensemble de valeurs de départ pour ladite paire de paramètres de contrôle, la paire de paramètres de contrôle ayant une valeur optimale étant sélectionnée parmi les valeurs de départ de ladite paire de paramètres de contrôle satisfaisant un ensemble de conditions de sélection comprenant au moins une condition relative à une valeur maximale de sensibilité, ladite valeur maximale de sensibilité étant définie en fonction desdits paramètres de contrôle et d'un temps d'espacement inter-véhicule de référence.

2. Procédé de contrôle selon l'une des revendications précédentes, **caractérisé en ce que** la condition relative à une valeur maximale de sensibilité est satisfaite pour une valeur de la paire de paramètres de contrôle si la valeur maximale de sensibilité pour ladite valeur de la paire est inférieure à un seuil de sensibilité prédéfini.

3. Procédé de contrôle selon l'une des revendications précédentes, **caractérisé en ce que** la paire de paramètres de contrôle ayant une valeur optimale est en outre sélectionnée parmi les valeurs de départ de ladite paire de paramètres de contrôle satisfaisant une condition relative à une fonction de stabilité de chaîne, ladite fonction de stabilité de chaîne étant définie comme la norme infinie de la fonction de transfert liée à position absolue du véhicule précédent (13) et à la position absolue dudit véhicule (12), ladite fonction de stabilité de chaîne étant définie en fonction desdits paramètres de contrôle et d'un temps d'espacement inter-véhicule prédéfini.

**4.** Procédé de contrôle selon la revendication 3, **caractérisé en ce que** la condition relative à la fonction de stabilité de chaîne est satisfaite pour une valeur de la paire de paramètres de contrôle si la valeur de la fonction de stabilité de chaîne pour ladite valeur de la paire est inférieure à un seuil de sensibilité prédéfini.

**5.** Procédé de contrôle selon l'une des revendications précédentes, **caractérisé en ce que** la paire de paramètres de contrôle ayant une valeur optimale est en outre sélectionnée parmi les valeurs de départ de ladite paire de paramètres de contrôle satisfaisant une condition relative aux capacités maximales des actionneurs.

**6.** Procédé de contrôle selon l'une des revendications précédentes, **caractérisé en ce que** la paire de paramètres de contrôle ayant une valeur optimale est la paire qui minimise l'erreur absolue intégrale de l'erreur de distance accumulée pendant une période de temps.

**7.** Procédé de contrôle selon la revendication 6, **caractérisé en ce que** la période de temps est variable.

**8.** Procédé de contrôle selon l'une des revendications précédentes, **caractérisé en ce que** le temps d'espacement inter-véhicule de référence est augmenté si aucune valeur de départ de la paire de paramètres de contrôle ne satisfait les dites conditions de sélection, le système de contrôle étant apte à déterminer une valeur optimale de ladite paire de paramètres de contrôle à partir du temps d'espacement inter-véhicule de référence augmenté d'un incrément prédéterminé et de nouvelles valeurs de départ de la paire de paramètres de contrôle.

**9.** Produit programme d'ordinateur, ledit programme d'ordinateur comprenant des instructions de code permettant d'effectuer les étapes du procédé selon l'une quelconque des revendications 1 à 8, lorsque ledit programme est exécuté sur un ordinateur.

**10.** Système de contrôle (300) implémenté dans un véhicule (12) pour contrôler la conduite du véhicule (12) à partir de données de capteurs (200) implémentés dans un système de perception (20) embarqué dans le véhicule, le système de perception comprenant un ou plusieurs capteurs et fournissant au moins une grandeur déterminée à partir des données mesurées par certains au moins desdits capteurs, le système de contrôle comprenant au moins un dispositif de contrôle (101) implémentant une boucle de contrôle pour générer au moins un signal de commande à un ou plusieurs actionneurs de véhicule en fonction d'une erreur déterminée entre :

- une distance inter-véhicule ($d_i$) et une valeur cible ($dr_i$) de la distance inter-véhicule, et/ou
- une vitesse ($v_i$) du véhicule et une valeur cible de la vitesse du véhicule ($vc_i$),
la distance inter-véhicule représentant la distance entre ledit véhicule (12) et un véhicule précédent (13), le signal de commande dépendant d'au moins une paire de paramètres de contrôle (Kpi, Kvi),
**caractérisé en ce que** le système de contrôle comprend un calculateur de retard (302) apte à calculer le retard entre une grandeur délivrée par le système de perception (20) et la réception de la grandeur par le système de contrôle (300) et **en ce que** le système de contrôle comprend en outre un dispositif de compensation de retard (303) configuré pour déterminer au moins une paire de paramètres de contrôle ayant une valeur optimale à partir d'un ensemble de valeurs de départ pour ladite paire de paramètres de contrôle, la paire de paramètres de contrôle ayant une valeur optimale étant sélectionnée parmi les valeurs de départ de ladite paire de paramètres de contrôle satisfaisant un ensemble de conditions de sélection comprenant au moins une condition relative à une valeur maximale de sensibilité, ladite valeur maximale de sensibilité étant définie en fonction desdits paramètres de contrôle et d'un temps d'espacement inter-véhicule de référence.

**11.** Système de contrôle selon la revendication 10, **caractérisé en ce que** le dispositif de contrôle est un dispositif de régulation de vitesse.

**Patentansprüche**

**1.** Steuerungsverfahren, das in ein Fahrzeug (12) implementiert ist, um das Führen des Fahrzeugs (12) ausgehend von Daten von Sensoren (200) zu steuern, die in ein in das Fahrzeug integriertes Wahrnehmungssystem (20) implementiert sind, wobei das Wahrnehmungssystem einen oder mehrere Sensoren umfasst und mindestens eine Größe ausgibt, die ausgehend von Daten bestimmt wird, die von mindestens einigen der Sensoren gemessen werden, wobei das Verfahren einen Steuerungsschritt umfasst, der mindestens einen Steuerungsschleife implementiert, um mindestens ein Ansteuerungssignal an einen oder mehrere Fahrzeugaktoren in Abhängigkeit von einem bestimmten Fehler zu erzeugen zwischen:

- einem Zwischenfahrzeugabstand ($d_i$) und einem Zielwert ($dr_i$) des Zwischenfahrzeugabstands und/oder
- einer Geschwindigkeit ($v_i$) des Fahrzeugs und einem Zielwert der Geschwindigkeit des Fahrzeugs ($vc_i$), wobei der Zwischenfahrzeugabstand den Abstand zwischen dem Fahrzeug (12) und einem vorausfahrenden Fahrzeug (13) darstellt, wobei das Ansteuerungssignal von mindestens einem Steuerungsparameterpaar (Kpi, Kvi) abhängt,
wobei das Verfahren **dadurch gekennzeichnet ist, dass** es einen Schritt des Berechnens der Verzögerung zwischen dem Zeitpunkt, zu dem eine Größe von dem Wahrnehmungssystem (20) ausgegeben wird, und dem Zeitpunkt des Empfangens der Größe im Steuerungsschritt umfasst,
und dadurch, dass es ferner einen Schritt der Verzögerungskompensation umfasst, der das Bestimmen mindestens eines Steuerungsparameterpaars, das einen optimalen Wert hat, ausgehend von einer Menge von Ausgangswerten für das Steuerungsparameterpaar umfasst, wobei das Steuerungsparameterpaar, das einen optimalen Wert hat, unter den Ausgangswerten des Steuerungsparameterpaars ausgewählt wird, die eine Menge von Auswahlbedingungen erfüllen, die mindestens eine Bedingung bezüglich eines maximalen Empfindlichkeitswerts umfassen, wobei der maximale Empfindlichkeitswert in Abhängigkeit von den Steuerungsparametern und von einer Referenz-Zwischenfahrzeugabstandszeit definiert wird.

2. Steuerungsverfahren nach einem der vorhergehenden Ansprüche, **dadurch gekennzeichnet, dass** die Bedingung bezüglich eines maximalen Empfindlichkeitswerts für einen Wert des Steuerungsparameterpaars erfüllt ist, wenn der maximale Empfindlichkeitswert für den Wert des Paars kleiner als ein vorgegebener Empfindlichkeitsschwellenwert ist.

3. Steuerungsverfahren nach einem der vorhergehenden Ansprüche, **dadurch gekennzeichnet, dass** das Steuerungsparameterpaar, das einen optimalen Wert hat, ferner unter den Ausgangswerten des Steuerungsparameterpaars ausgewählt wird, die eine Bedingung bezüglich einer Kettenstabilitätsfunktion erfüllen, wobei die Kettenstabilitätsfunktion definiert ist als die unendliche Norm der Übertragungsfunktion, die mit der absoluten Position des vorausfahrenden Fahrzeugs (13) und mit der absoluten Position des Fahrzeugs (12) verknüpft ist, wobei die Kettenstabilitätsfunktion in Abhängigkeit von den Steuerungsparametern und von einer vorgegebenen Zwischenfahrzeugabstandszeit definiert wird.

4. Steuerungsverfahren nach Anspruch 3, **dadurch gekennzeichnet, dass** die Bedingung bezüglich der Kettenstabilitätsfunktion für einen Wert des Steuerungsparameterpaars erfüllt ist, wenn der Wert der Kettenstabilitätsfunktion für den Wert des Paars kleiner als ein vorgegebener Empfindlichkeitsschwellenwert ist.

5. Steuerungsverfahren nach einem der vorhergehenden Ansprüche, **dadurch gekennzeichnet, dass** das Steuerungsparameterpaar, das einen optimalen Wert hat, ferner unter den Ausgangswerten des Steuerungsparameterpaars ausgewählt wird, die eine Bedingung bezüglich der maximalen Kapazitäten der Aktoren erfüllen.

6. Steuerungsverfahren nach einem der vorhergehenden Ansprüche, **dadurch gekennzeichnet, dass** das Steuerungsparameterpaar, das einen optimalen Wert hat, das Paar ist, das den integralen absoluten Fehler des während einer Zeitperiode angesammelten Abstandsfehlers minimiert.

7. Steuerungsverfahren nach Anspruch 6, **dadurch gekennzeichnet, dass** die Zeitperiode variabel ist.

8. Steuerungsverfahren nach einem der vorhergehenden Ansprüche, **dadurch gekennzeichnet, dass** die Referenz-Zwischenfahrzeugabstandszeit erhöht wird, wenn kein Ausgangswert des Steuerungsparameterpaars die Auswahlbedingungen erfüllt, wobei das Steuerungssystem geeignet ist, einen optimalen Wert des Steuerungsparameterpaars ausgehend von der Referenz-Zwischenfahrzeugabstandszeit, erhöht um ein vorbestimmtes Inkrement, und von neuen Ausgangswerten des Steuerungsparameterpaars zu bestimmen.

9. Computerprogrammprodukt, wobei das Computerprogramm Codeanweisungen umfasst, die es ermöglichen, bei der Ausführung des Programms auf einem Computer die Schritte des Verfahrens nach einem der Ansprüche 1 bis 8 auszuführen.

10. Steuerungssystem, das in ein Fahrzeug (12) implementiert ist, um das Führen des Fahrzeugs (12) ausgehend von Daten von Sensoren (200) zu steuern, die in ein in das Fahrzeug integriertes Wahrnehmungssystem (20) implementiert sind, wobei das Wahrnehmungssystem einen oder mehrere Sensoren umfasst und mindestens eine Größe ausgibt, die ausgehend von Daten bestimmt wird, die von mindestens einigen der Sensoren gemessen werden, wobei das Steuerungssystem mindestens eine Steuerungsvorrichtung (101) umfasst, die eine Steuerungsschleife implementiert, um mindestens ein Ansteuerungssignal an einen oder mehrere Fahrzeugaktoren in Abhängigkeit von einem bestimmten Fehler zu erzeugen zwischen:

- einem Zwischenfahrzeugabstand ($d_i$) und einem Zielwert ($dr_i$) des Zwischenfahrzeugabstands und/oder
- einer Geschwindigkeit ($v_i$) des Fahrzeugs und einem Zielwert der Geschwindigkeit des Fahrzeugs ($vc_i$), wobei der Zwischenfahrzeugabstand den Abstand zwischen dem Fahrzeug (12) und einem vorausfahrenden Fahrzeug (13) darstellt, wobei das Ansteuerungssignal von mindestens einem Steuerungsparameterpaar (Kpi, Kvi) abhängt,

**dadurch gekennzeichnet, dass** das Steuerungssystem einen Verzögerungsrechner (302) umfasst, der geeignet ist, die Verzögerung zwischen einer von dem Wahrnehmungssystem (20) ausgegebenen Größe und dem Empfangen der Größe durch das Steuerungssystem (300) zu berechnen, und dadurch, dass das Steuerungssystem ferner eine Verzögerungskompensationsvorrichtung (303) umfasst, die dazu ausgestaltet ist, mindestens ein Steuerungsparameterpaar, das einen optimalen Wert hat, ausgehend von einer Menge von Ausgangswerten für das Steuerungsparameterpaar zu bestimmen, wobei das Steuerungsparameterpaar, das einen optimalen Wert hat, unter den Ausgangswerten des Steuerungsparameterpaars ausgewählt wird, die eine Menge von Auswahlbedingungen erfüllen, die mindestens eine Bedingung bezüglich eines maximalen Empfindlichkeitswerts umfassen, wobei der maximale Empfindlichkeitswert in Abhängigkeit von den Steuerungsparametern und von einer Referenz-Zwischenfahrzeugabstandszeit definiert wird.

11. Steuerungssystem nach Anspruch 10, **dadurch gekennzeichnet, dass** die Steuerungsvorrichtung eine Geschwindigkeitsregelungsvorrichtung ist.

## Claims

1. Control method, implemented in a vehicle (12), for controlling the driving of the vehicle (12) based on data from sensors (200) implemented in a perception system (20) on board the vehicle, the perception system comprising one or more sensors and supplying at least one quantity determined based on the data measured by at least some of said sensors, the method comprising a control step implementing a control loop to generate at least one command signal for one or more vehicle actuators on the basis of an error determined between:

- an inter-vehicle distance ($d_i$) and a target value ($dr_i$) for the inter-vehicle distance, and/or
- a speed ($v_i$) of the vehicle and a target value for the speed of the vehicle ($vc_i$), the inter-vehicle distance representing the distance between said vehicle (12) and a vehicle in front (13), the command signal depending on at least one pair of control parameters (Kpi, Kvi), the method being **characterized in that** it comprises a step of computing the delay between the time when a quantity is delivered by the perception system (20) and the time of reception of the quantity in the control step, and **in that** it furthermore comprises a delay compensation step comprising determining at least one pair of control parameters having an optimum value based on a set of starting values for said pair of control parameters, the pair of control parameters having an optimum value being selected from among the starting values of said pair of control parameters satisfying a set of selection conditions comprising at least one condition in relation to a maximum sensitivity value, said maximum sensitivity value being defined on the basis of said control parameters and of a reference inter-vehicle separation time.

2. Control method according to one of the preceding claims, **characterized in that** the condition in relation to a maximum sensitivity value is satisfied for a value of the pair of control parameters if the maximum sensitivity value for said value of the pair is lower than a predefined sensitivity threshold.

3. Control method according to either of the preceding claims, **characterized in that** the pair of control parameters having an optimum value is furthermore selected from among the starting values of said pair of control parameters satisfying a condition in relation to a string stability function, said string stability function being defined as the infinite norm of the transfer function related to the absolute position of the vehicle in front (13) and to the absolute position of said vehicle (12), said string stability function being defined on the basis of said control parameters and of a predefined inter-vehicle separation time.

4. Control method according to Claim 3, **characterized in that** the condition in relation to the string stability function is satisfied for a value of the pair of control parameters if the value of the string stability function for said value of the pair is lower than a predefined sensitivity threshold.

5. Control method according to one of the preceding claims, **characterized in that** the pair of control parameters having an optimum value is furthermore selected from among the starting values of said pair of control parameters satisfying a condition in relation to the maximum capabilities of the actuators.

6. Control method according to one of the preceding claims, **characterized in that** the pair of control parameters having an optimum value is the pair that minimizes the integral absolute error of the distance error accumulated over a period of time.

7. Control method according to Claim 6, **characterized in that** the period of time is variable.

8. Control method according to one of the preceding claims, **characterized in that** the reference inter-vehicle separation time is increased if no starting value of the pair of control parameters satisfies said selection conditions, the control system being able to determine an optimum value of said pair of control parameters based on the reference inter-vehicle separation time plus a predetermined increment and new starting values of the pair of control parameters.

9. Computer program product, said computer program comprising code instructions for performing the steps of the method according to any one of Claims 1 to 8 when said program is executed on a computer.

10. Control system (300), implemented in a vehicle (12), for controlling the driving of the vehicle (12) based on data from sensors (200) implemented in a perception system (20) on board the vehicle, the perception system comprising one or more sensors and supplying at least one quantity determined based on the data measured by at least some of said sensors, the control system comprising at least one control device (101) implementing a control loop to generate at least one command signal for one or more vehicle actuators on the basis of an error determined between:

   - an inter-vehicle distance ($d_i$) and a target value ($dr_i$) for the inter-vehicle distance, and/or
   - a speed ($v_i$) of the vehicle and a target value for the speed of the vehicle ($vc_i$),
   the inter-vehicle distance representing the distance between said vehicle (12) and a vehicle in front (13), the command signal depending on at least one pair of control parameters (Kpi, Kvi),
   **characterized in that** the control system comprises a delay computer (302) able to compute the delay between a quantity delivered by the perception system (20) and the reception of the quantity by the control system (300) and **in that** the control system furthermore comprises a delay compensation device (303) configured to determine at least one pair of control parameters having an optimum value based on a set of starting values for said pair of control parameters, the pair of control parameters having an optimum value being selected from among the starting values of said pair of control parameters satisfying a set of selection conditions comprising at least one condition in relation to a maximum sensitivity value, said maximum sensitivity value being defined on the basis of said control parameters and of a reference inter-vehicle separation time.

11. Control system according to Claim 10, **characterized in that** the control device is a speed regulation device.

FIG.1

FIG.2

SYSTEME DE PERCEPTION

Capteurs de perception

SYSTEME D'AIDE A LA CONDUITE

SYSTEME DE CONTROLE DE VEHICULE

Contrôleur de suivi de véhicules

Gestionnaire de règles de suivi de véhicules

DISPOSITIF DE COMPENSATION DE RETARD DE CAPTEUR

SYSTEME GNSS

EP 4 077 087 B1

FIG.3

FIG.4

Prédéfinir le temps inter-véhicule de référence (500)

Déterminer un ensemble de paires de valeurs de départ {Kpi, Kvi} dans des plages de valeurs prédéfinies (501)

Pour chaque paire de départ

Condition de valeur maximale de sensibilité satisfaite ? (502)

Ajouter la paire de départ dans la liste L0 de paires candidates (503)

Toutes les paires de départ ont été traitées ? (504)

Pour chaque paire candidate

Condition de Stabilité de chaîne satisfaite ? (505)

Ajouter la paire candidate dans la liste L1 de paires présélectionnées (506)

Toutes les paires candidates ont été traitées ? (507)

Pour chaque paire présélectionnée

Condition de capacité d'actionneurs satisfaite? (508)

Ajouter la paire candidate dans la liste L2 de paires sélectionnées (509)

Toutes les paires candidates ont été traitées ? (510)

Augmenter le temps de référence h qui minimise l'IAE si L2 est vide (511)

Choisir la paire de la liste des paires sélectionnées qui minimise l'IAE si L2 non vide (512)

FIG.5

FIG.6

EP 4 077 087 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 625657381 B
- US 8352112 B2
- US 20100256852 A
- DE 102012214555 A1